(19)

Europäisches
Patentamt

European
Patent Office

Office européen
des brevets

(11) **EP 4 717 785 A1**

(12) # EUROPEAN PATENT APPLICATION

(43) Date of publication:
**01.04.2026 Bulletin 2026/14**

(21) Application number: **24202777.9**

(22) Date of filing: **26.09.2024**

(51) International Patent Classification (IPC):
*C22C 19/05* (2006.01)  *C22C 1/04* (2023.01)
*B23K 35/30* (2006.01)  *C22C 30/00* (2006.01)
*B23K 1/00* (2006.01)  *B23K 35/02* (2006.01)

(52) Cooperative Patent Classification (CPC):
**C22C 19/056; B23K 35/3033; B23K 35/304;
C22C 1/0433; C22C 30/00;** B23K 1/0018;
B23K 35/0244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Energy Global GmbH & Co.
KG
81739 München (DE)**

(72) Inventors:
• **Hasselqvist, Magnus
61213 Finspång (SE)**
• **Gustafsson, David
58564 Linghem (SE)**
• **Gyllenhammar, Maria
59179 Fornåsa (SE)**

(54) **A NOVEL METHODOLOGY AND A NOVEL LM FILLER FOR WIDE GAP BRAZING OF NEW INDUSTRIAL GAS TURBINE BLADE ALLOYS**

(57)    The present invention relates to a metal alloy being especially useful, for example, as LM filler for Wide Gap Brazing of new IGT alloys such as STAL15SX used for monocrystalline casting, Edge14 used for Laser Metal Deposition and equiaxed casting, and STAL125CC1 and STAL125CC2 used for equiaxed casting. It further relates to the use of said metal alloy for brazing.

EP 4 717 785 A1

**Description**

The present invention relates to a new nickel-base gamma prime strengthened superalloy. It further relates to its use for brazing like as LM filler for Wide Gap Brazing of Classical Industrial Gas Turbine alloys such as, but not restricted to, IN792, GTD-111, GTD-141 and IN738LC.

Nickel base gamma prime strengthened superalloys, from here on referred to as blade alloys, are essential for critical components in aero and land-based gas turbines, but are used also in other applications. The difference between blade alloys depends on the level of knowledge and production technology available at the time they were developed, and on different relative emphasis on properties such as corrosion resistance, oxidation resistance, weldability, phase stability and creep strength.

Blade alloys are used in monocrystalline (SX), directionally solidified (DS) or equiaxed (CC) form. Each grain is a crystal mainly consisting of a matrix of the gamma phase, which is essentially Ni with elements like Co, Fe, Cr, Co, Fe, Mo, W and Re in solid solution, and particles of the gamma prime phase, which is essentially $Ni_3Al$ with elements like Ti, Ta, Nb and Hf in solid solution. Each grain is a two-phase crystal in which the gamma matrix and the gamma prime particles share the same crystal orientation and the boundaries between the matrix and the particles are coherent. Grain boundaries, if present, are usually decorated by carbides and/or borides which provide cohesive strength. Zr also contributes to grain boundary cohesion.

Creep strength is provided by the gamma prime particles, by Ti, Ta and Nb which provide solution strengthening of the gamma prime particles, and elements like Mo, W and Re which provide solution strengthening of the gamma matrix. Al provides creep strength as it increases the amount of gamma prime particles, and as the presence of gamma prime particles concentrates the levels of Mo, W and Re in the matrix. High creep strength furthermore require that the grain boundaries are 'glued together' by B, Zr and C. This require said alloy elements to be present at low measured levels such that borides and carbides are present as discrete particles rather than as continuous film on said boundaries.

Blade alloys get their protection against oxidation and corrosion through formation of a protective, i.e. continuous and adherent, $Cr_2O_2$ layer and/or a protective, i.e. continuous and adherent, $Al_2O_3$ layer, in the oxide scale.

The generally accepted rule of thumb is that protective $Cr_2O_3$ formation require at least 12 wt.-% Cr. Protective $Cr_2O_2$ layers typically stay long term protective up to temperatures in the order of 900°C in the flowing hot gas environment in a gas turbine hot path. The ability to form protective $Al_2O_3$ is provided by Al, enhanced by Cr, Fe, Ta and Si, and reduced by V and Ti. Protective $Al_2O_3$ is typically formed down to about 850°C in blade alloys regarded as $Al_2O_3$ formers.

Due to the difference in thermal expansion between the metal and the protective oxide layer, said oxide layer will spall off and then need to be reformed. Each time this happens the reservoir of Cr (for protective $Cr_2O_2$) or Al (for protective $Al_2O_3$) is reduced, and eventually reformation is not possible leading to accelerated oxidation. The protective layer adherence is severely reduced by tramp elements such as S, but, that this effect can be neutralized by a combination of clean casting and addition of small measured levels of S getterers like Zr, Hf , Sc, Y, the actinides and the lanthanides in the alloy. Such additions will therefor suppress the time dependent degradation of the alloy. In addition, it is obviously an advantage to apply clean production processes in order to reduce the initial sulfur content. S can e.g. be present in master heats for casting, powders for brazing, and within rigs such as brazing rigs.

If the amount of alloy elements in a blade alloy is too high, too high levels of undesired phases (UP) such as σ and Laves phases will form in service. One particular effect of UP precipitation is a reduction in creep strength. Another effect is embrittlement. Another effect is reduction of oxidation and corrosion resistance if Cr is tied up in Cr rich UP.

The blade alloy density can be calculated using the formula

$$\rho = 8.29604 - 0.004535Co - 0.0164Cr + 0.01295Mo + 0.0593Re + 0.06595W - 0.06595Al - 0.0236Ti + 0.05441Ta - 0.002Nb + 0.033Hf - 0.063Si - 0.009Fe$$

where $\rho$ is in [kg/dm$^3$] and the element contents are provided in [wt.-%].

Most blade alloys can be characterized as Classical Industrial Gas Turbine (IGT) alloys, Aero alloys or New IGT alloys, see Table 1.

The class of Classical IGT alloys include IN792, GTD-111, GTD-141 and IN738LC. The classical IGT alloys contain at least 12 wt.-% Cr for formation of protective $Cr_2O_3$. The classical IGT blade alloys do not have the ability to form protective $Al_2O_3$. The hot corrosion resistance of the alloy SC16 with 16 wt.-% Cr and 3 wt.-% Mo is significantly inferior to the alloy IN738LC with 16 wt.-% Cr and 1.8 wt.-% Mo. Most Classical IGT alloys include at most 2 wt.-% Mo to avoid the problems seen in SC16. Most hot gas path blade alloys in industrial gas turbines are still made in the classical IGT alloys (hence the name for this class of blade alloys).

The class of Aero alloys include CM247CC and CMSX-4, see Table 1-1 and Table 1-2. Most Aero alloys are able to form protective $Al_2O_3$ thanks to low levels of Ti and Nb, and high levels of Al and Ta, and despite low levels of Cr. Due to their low Cr levels they are unable to form protective $Cr_2O_3$.

Since protective $Al_2O_3$ cannot form below about 850°C, the Aero alloys are vulnerable to the influx of corrosive elements into the blade alloy through a too permeable oxide scale. Furthermore, corrosive agents such as alkali salts which cause hot corrosion unfortunately tend to be especially active in the range 700°C to 850°C. Many hot gas path components in Aero engines are made in Aero alloys (hence the name of this class of alloys).

The class of New IGT alloys includes STAL15SX, STAL125CC1, STAL15CC2 and Edge14, see Table 1. These alloys have sufficient Cr for formation of protective $Cr_2O_3$ at low and intermediate temperatures, typically up to about 900°C. Furthermore, they form protective $Al_2O_3$ at high temperature, typically above about 850°C, thanks to moderate to high levels of Al supported by a high sum of the elements Cr, Ta and Fe. The New IGT alloys are, just as the Aero alloys, low in Ti and Nb. Their Mo levels are below the 2 wt.-% Mo limit described above for Classical IGT alloys. The New IGT alloys enable corrosion resistance on the Classical IGT alloy level in combination with oxidation resistance on the Aero alloy level. It is of interest for the present invention that the New IGT CC alloys in Table 1 contain a small measured level of Si. This is to avoid the risk that the Si level becomes too low for Si to act as catalyst for selective oxidation. It is furthermore of interest to note that when the trial alloy STAL125CC2 was designed as a derivative of STAL125CC1 via a partial replacement of Co by Fe, the gamma prime decreased slightly, and the W content had to be slightly reduced to avoid an increased risk for UP formation. Testing showed that the time to creep rupture was reduced by about 50% while the creep ductility was somewhat improved. The inclusion of Fe thus means that some creep strength is traded for further improved oxidation resistance, a trade off which is e.g. reasonable in the context of moderately loaded stator parts in gas turbines given the always increasing Turbine Inlet Temperatures.

When blade alloys are cast, the solidification starts at the Liquidus temperature, is finalized at the Solidus temperature, and gamma prime starts to precipitate at the Solvus temperature. The temperature range between the Solvus and the Solidus is known as the Heat Treatment Window (HTW). The as cast gamma prime morphology is seldom useful. The casting is accordingly followed by a (gamma prime) solutioning step with a solutioning temperature within the HTW, followed by one or more aging steps below the Solvus to establish a useful gamma prime morphology. The combination of these steps is referred to here as the nominal heat treatment. The optimization of the heat treatment process is as important and (at least as) time consuming as the optimization of the composition when a new alloy is developed. Once the nominal composition and the associated nominal heat treatment have been established, and Design Data derived based on tests on specimen produced according to this combination of composition and heat treatment, the new blade alloy is established. Any coating application or brazing step must then be introduced such that the gamma prime morphology is not altered relative to the outcome from the nominal heat treatment, otherwise the Design Data are invalidated. The introduction of a brazing step without invalidation of the Design Data is made easier if the brazing is carried out at the solutioning temperature for the blade alloy.

A Nickel base Brazing Filler Metal (BFM) is an alloy to which one or more melt depressant elements have been added to force the Liquidus in said alloy down to a level below the intended brazing temperature for said BFM. In a typical thin gap brazing process the temperature is raised to above the Liquidus for the BFM, while the parts to be joined should be below their Solidus levels to avoid incipient melting in said parts. The liquid BFM is drawn into the gap by capillary force, the surfaces of that gap are wetted by the BFM, and the melt depressant in the BFM starts to diffuse from the gap into the surrounding parts. The resultant reduction in the levels of melt depressants in the gap should preferably resuit in full solidification while the temperature is still kept at the brazing temperature. This desirable outcome is called Transient Liquid Bonding (TLB). If TLB is achieved at the solutioning temperature for the main part being brazed, then we can exclude remelting of the joint at any subsequent resolutioning step, done e.g. during a subsequent repair process. The melt depressant elements should preferably be present at 'not too detrimental' values in the parts in and around the joint after the brazing.

The by far most common melt depressant element for brazing of Nickel base alloys is B. If B is used as melt depressant, the B content in the BFM is about 3 wt.-%, see Table 2, while the B contents in the parts to be joined is about 0.015 wt.-%, see Table 1. A good result is a B content not exceeding 0.05 wt.-% anywhere in and around the joint. This can in principle be achieved if the gap is suitably thin (0.02 to 0.12mm as also needed to enable capillary force brazing) and the brazing temperature is done at the solutioning temperature for the blade alloy in the main part to be brazed, and the brazing time sufficiently long. The reason is that the parts around the gap constitute huge diffusion sinks for the B in the BFM. B is the most common melt depressant since it is a powerful melt depressant and has a high diffusivity in blade alloys relative to most other melt depressants. While B at a small measured level is vital for the creep ductility of a blade alloy, the ductility (under most loadings conditions) decreases as the B content increases. At sufficiently high residual B contents the formation of Cr rich borides will unfortunately reduce the Cr activity resulting in reduced oxidation and corrosion resistance in and around the joint. A high residual B content also implies that TLB cannot be achieved.

When it is difficult to obtain a sufficiently thin gap, or a potentially irregularly shaped hole need to be filled as part of a repair process, Wide Gap Brazing (WGB) can be utilized. A mix of a BFM, in this context known as the Low Melting (LM) filler, and a High Melting (HM) filler is used to fill this wide gap. The temperature is increased to the brazing temperature where (ideally) the LM filler fully melts while the HM filler stays solid. Then interdiffusion between the initial LM and HM areas result in a more or less homogenized Mixed Alloy (MA). The HM:LM Mixing Ratio (MR) is typically between about 1 and 3. During WGB it is the HM filler which tries, with more or less success, to act as the diffusion sink for the melt depressants in the LM filler. Relative to thin gap brazing there is significantly less material available for neutralization of the melt depressants.

The standard methodology for WGB of a blade alloy is to choose a standard BFM having Boron as the main melt depressant as the LM filler, and the blade alloy itself (or possibly a similar blade alloy) as the HM filler. The resulting MA contains a massively increased level of B relative to the blade alloy. The level of B in the LM filler is typically about 3 wt.-%. With MR=2 this translates into a B content of about 1wt.-% in the MA. This implies that the B content in the MA will be about 50 to 100 times higher than in the blade alloy, compare Table 1. While B at a low level is essential for the grain boundary strength of a blade alloy, its presence at a massively higher level will typically reduce the strength, the ductility, the corrosion resistance and the oxidation resistance. Typically, there will be precipitation of Cr rich borides which embrittle the MA and reduce the effective level of Cr in the MA such that the corrosion and oxidation resistance is accordingly reduced relative to the base alloy. There is also a high risk that the MA will have a Solidus below the solutioning temperature for the base alloy such that TLB cannot be achieved for brazing at said solutioning temperature. In total, the MA will be a significantly B contaminated version of the blade alloy being used as HM filler.

There are BFM's with other melt depressant recipes, see Table 2. BNi5 is based on Si, BNi1a is based on a combination of B and Si and BNi7 is based in P, US11344977B2 discloses BFM's based on Ti and Zr and Ti and Hf referred to as OZ1 and OZ2 respectively. US20150343574A1 discloses a BFM based on Cr, Mo and Ti referred to as OZ3 and OZ4.

Consider now an extension of the standard methodology to the use of any BFM in which 'B is not utilized as melt depressant' as LM filler in combination with a blade alloy as HM filler:

If a BFM using Si as main melt depressant is chosen while the choice of a blade alloy as HM filler is kept, the MA will contain a massively increased level of Si in the MA relative to that in the blade alloy. The level of Si in the LM filler is typically about 10 wt.-%. With MR=2 this translates into a Si content of 3 wt.-% in the MA. Blade alloys tend to contain about 0.01 wt.-% Si as deliberate content, unless it is regarded as a contaminant. This implies that the Si content in the MA will be about 300 times higher than in a normal blade alloy. Its presence at a massively higher level in the MA will typically reduce the strength of its grain boundaries relative to that of a standard blade alloy. It can also reduce the Solidus of the MA and make TLB impossible to achieve. In total, the MA will be a significantly Si contaminated version of the blade alloy being used as HM filler.

If a BFM using Zr as main melt depressant is chosen while the choice of a blade alloy as HM filler is kept, the MA will contain a massively increased level of Zr in the MA relative to that in the blade alloy. The level of Zr in the LM filler is about 10 wt.-%, see Table 2. With MR=2 this translates into a Zr content of at least 3wt.-% in the MA. Blade alloys tend to contain between about 0.01 to 0.02 wt.-% Zr as deliberate content, see Table 1. This implies that the Zr content in the MA will be about 150 times higher than in a standard blade alloy. Its presence at a massively higher level in the MA than in a standard blade alloy will typically reduce the Solidus of the MA and make TLB impossible to achieve. In total, the MA will be a significantly Zr contaminated version of the blade alloy being used as HM filler.

If a BFM using P, Mn or Ge is used as LM filler while the choice of a blade alloy as HM filler is kept, the levels of P, Mn or Ge in the MA will be massively higher than the very low levels at which they are allowed in a standard blade alloy specification where these elements are seen as contaminants. In total, the MA will be a significantly contaminated version of the blade alloy being used as HM filler. The use of these as melt depressants in a LM filler should thus if possible be avoided.

If a BFM using alloy elements such as Cr, Mo, Ti, Ta, Nb or Hf is used as LM filler while the choice of the base alloy is kept, their values in the MA will not be massively higher than in a standard blade alloy, and the MA will essentially contain the same group of elements as a Classical IGT alloy. This group of BFM's, exemplified by OZ2 and OZ3 in Table 2, is of obvious interest. Consider, as illuminating examples, WGB with MR=2 in which these are used as LM fillers while the blade alloy STAL125CC1 is used as HM filler:

OZ2 as LM filler result in a MA given, in wt.-%, by MA2: Ni-3.7Co-9.8Cr-1Mo-2.7W-3.7A1-2.7Ti-5.3Ta-6.5Hf- 0.05C-0.01B-0.007Zr-0.007Si

MA2 has a Cr content below 12 wt.-% Cr, hence a reduced corrosion and oxidation resistance relative to STAL125CC1 has to be expected. Furthermore, the Al and Ta contents are reduced while the Ti level is increased and this is also detrimental to the oxidation resistance.

ThermoCalc with TTNi8 predicts 5 mol% Ni7M2, 4 mol% $\sigma$ and 7 mol% P phase as UP at 800°C, and crucially a Solidus of only 1110°C implying that TLB cannot be achieved at 1250°C which is the solutioning temperature for STAL125CC1. Even though the Hf content in STAL125CC1 is only 0.5 wt.-%, the very high level of Hf in OZ2 implies a Hf level in the MA which implies a significant retained melt depressant effect.

OZ3 as LM filler result in a MA given, in wt.-%, by MA3: Ni-8.6Co-13.7Cr-5.3Mo-2.7W-4.4Al-3.3Ti-5.3Ta-0.3Hf- 0.05C-0.01B-0.007Zr-0.007Si

The Al and Ta contents are reduced while the Ti level is increased, and this is detrimental to the oxidation resistance.

The Mo content in MA3 is quite high. Hence ThermoCalc with TTNi8 predicts 19 mol% σ phase at 800°C as UP, a Solidus of 1238°C implying that TLB cannot be achieved at 1250°C and a risk for hot corrosion risks as it is well above the 2 wt.-% limit. One of the reasons for these problems is that STAL125CC1 has 1.5 wt.-% Mo, not far from the 2 wt.-% limit, hence its ability to act as a sink for the high Mo content in the LM filler is poor.

It is an objective of the present invention to provide a combination of a Low Melt filler, and a methodology for Wide Gap Brazing, enabling the resulting MA to be a nickel base gamma prime strengthened superalloy in the New IGT class of alloys. In line with this a further objective is that the melt depressant recipe in the LM filler should be based only on alloy elements which occur naturally in New IGT alloys. In line with this a further objective is that the MA should be able to form a protective $Cr_2O_3$ layer at low and intermediate temperatures, form a protective $Al_2O_3$ layer at high temperatures, contain grains consisting essentially of between 30 and 60 mol% gamma prime particles in a gamma matrix, contain a grain boundary strengthening element recipe in line with those in New IGT alloys, contain between 4 and 7 wt.-% of the sum of Mo, Re and W for strengthening of the gamma matrix, contain between 4 and 8 wt.-% of the sum of Ta and Hf, contain at most 1.5 wt.-% Ti, contain at most 1.5 wt.-% Nb and have high stability against formation of too much unwanted phases. It is furthermore an objective of this invention that the LM filler should have a Liquidus of at most about 1230°C to enable Transient Liquid Brazing (TLB) in the 1250°C to 1280°C range in which New IGT alloys are solutioned.

It a further objective of the present invention to use the LM filler for thin gap brazing of a blade alloy against a lean nickel base alloy. In particular, the objective is to use it to attach a cover plate made in a lean sheet alloy such as Haynes214 to a main part made in a new IGT alloy to form a gas turbine stator part such as a vane or a heat shield. The lean sheet alloy will then act as a diffusion sink for excess levels of elements such as Fe, Mo, Ti, Ta, Nb or Hf in the LM filler.

It is a further objective of the present invention to use the M filler for thin gap brazing of a blade alloy against any nickel base alloy in which at least one of the surfaces to be brazed has been nickel plated. The nickel plating will then act as a diffusion sink for the excess levels of elements such as Fe, Mo, Ti, Ta, Nb or Hf in the LM filler.

These problems are solved by the methods and products as disclosed hereafter and in the claims. Further beneficial embodiments are disclosed in the dependent claims and the further description. These benefits can be used to adapt the corresponding solution to specific needs or to solve further problems.

According to one aspect the present invention refers to a metal alloy containing

0 wt.-% to 15 wt.-% Co,
12 wt.-% to 18 wt.-% Fe,
12 wt.-% to 18 wt.-% Cr,
1 wt.-% to 6 wt.-% Mo,
0 wt.-% to 3 wt.-% Re,
0 wt.-% to 3 wt.-% W,
3.5 wt.-% to 7 wt.-% Al,
1 wt.-% to 4 wt.-% Ti,
9 wt.-% to 20 wt.-% Ta,
0 wt.-% to 4 wt.-% Nb,
0 wt.-% to 0.1 wt.-% C,
0 wt.-% to 0.05 wt.-% B,
0 wt.-% to 0.1 wt.-% Zr,
0.1 wt.-% to 6 wt.-% Hf,
0 wt.-% to 0.1 wt.-% Si, and
a total amount of rare earths such as Sc, Y, actinides and lanthanides being selected from a range from 0 wt.-% to 0.3 wt.-%,
the rest being Ni and unavoidable impurities.

According to further embodiments the metal alloy contains

0 wt.-% to 15 wt.-% Co,
12 wt.-% to 18 wt.-% Fe,
12 wt.-% to 18 wt.-% Cr,
1 wt.-% to 6 wt.-% Mo,
0 wt.-% to 3 wt.-% Re,
0 wt.-% to 3 wt.-% W,
3.5 wt.-% to 7 wt.-% Al,

1 wt.-% to 4 wt.-% Ti,
9 wt.-% to 20 wt.-% Ta,
0 wt.-% to 4 wt.-% Nb,
0 wt.-% to 0.1 wt.-% C,
0.005 wt.-% to 0.05 wt.-% B,
0.005 wt.-% to 0.05 wt.-% Zr,
0.1 wt.-% to 6 wt.-% Hf,
0.005 wt.-% to 0.05 wt.-% Si, and
a total amount of rare earths such as Sc, Y, actinides and lanthanides being selected from a range from 0.01 wt.-% to 0.3 wt.-%,
the rest being Ni and unavoidable impurities.

According to further embodiments the metal alloy contains

13 wt.-% to 17 wt.-% Fe,
12 wt.-% to 16 wt.-% Cr,
2 wt.-% to 4 wt.-% Mo,
3.5 wt.-% to 5.5 wt.-% Al,
2 wt.-% to 3 wt.-% Ti,
16 wt.-% to 20 wt.-% Ta,
0.005 wt.-% to 0.05 wt.-% C,
0.005 wt.-% to 0.03 wt.-% B,
0.005 wt.-% to 0.03 wt.-% Zr,
0.1 wt.-% to 0.5 wt.-% Hf,
0.005 wt.-% to 0.03 wt.-% Si, and
0.01 wt.-% to 0.06 wt.-% Y,
the rest being Ni and unavoidable impurities

According to further embodiments the metal alloy contains about 15 wt.-% Fe, about 14 wt.-% Cr, about 3 wt.-% Mo, about 4.5 wt.-% Al, about 2.4 wt.-% Ti, about 18 wt.-% Ta, about 0.01 wt.-% C, about 0.015 wt.-% B, about 0.01 wt.-% Zr, about 0.3 wt.-% Hf, about 0.01 wt.-% Si, and about 0.04 wt.- % Y, the rest being Ni and unavoidable impurities.
According to further embodiments the metal alloy contains

7 wt.-% to 13 wt.-% Co,
13 wt.-% to 17 wt.-% Fe,
12 wt.-% to 16 wt.-% Cr,
4 wt.-% to 5 wt.-% Mo,
4 wt.-% to 7 wt.-% Al,
2 wt.-% to 3 wt.-% Ti,
9 wt.-% to 12 wt.-% Ta,
0.005 wt.-% to 0.03 wt.-% C,
0.005 wt.-% to 0.03 wt.-% B,
0.005 wt.-% to 0.03 wt.-% Zr,
0.005 wt.-% to 0.03 wt.-% Si, and
0.01 wt.-% to 0.06 wt.-% of Y,
the rest being Ni and unavoidable impurities.

According to further embodiments the metal alloy contains about 9 wt.-% Co, about 15 wt.-% Fe, about 14 wt.-% Cr, about 4.5 wt.-% Mo, about 5 wt.-% Al, about 2.4 wt.-% Ti, about 10.5 wt.-% Ta, about 0.01 wt.-% C, about 0.015 wt.-% B, about 0.01 wt.-% Zr, about 0.01 wt.-% Si, and about 0.04 wt.-% Y, the rest being Ni and unavoidable impurities
According to further embodiments the metal alloy contains less than 5ppmw S. Herein, ppmw stands for parts per million based on the weight of the metal alloy.
According to a further aspect the present invention refers to a use of a metal alloy according to any of the preceding claims for brazing.
According to further embodiments the brazing is a wide gap brazing with a lean high melting filler to enable a mixed alloy which is a classical industrial gas turbine blade alloy with a high phase stability as outlined the section describing the invention in which the HM filler is produced with a low sulfur process resulting in <5ppmw S.
According to further embodiments the brazing is thin gap brazing of a classical industrial gas turbine alloy to a lean sheet alloy such that the sheet alloy is strengthened at and close to the joint as it absorbs the excess levels of strengthening elements from the low melting filler.

According to further embodiments the brazing is thin gap brazing of parts made in Nickel base alloys in which one or more of the surfaces to be brazed has been Ni plated such that the plating is strengthened as it absorbs the excess levels of strengthening elements from the low melting filler.

It is clear from the technical background that if B, Si, Zr, P, Mn or Ge are used in the LM filler, they will be present at very significantly higher levels in the MA than their allowable upper limits in the specifications for Classical IGT alloys. This is deemed risky with respect to the objectives above. Hf at a high level is also seen as risky.

An observation based on MA3 above is that If Mo was eliminated from the HM filler, the Solidus would increase to 1246°C, almost enabling TLB, and the UP at 800°C would go down to 16 mol% s. Furthermore, with so much Mo nevertheless still left for matrix strengthening, W could be eliminated from the HM filler. Furthermore, the Cr content in the HM filler could be reduced such that the MA contained 12.5 wt.-% Cr as in STAL125CC1. Now the Solidus would increase to 1259°C, enabling TLB, and the UP at 800°C would decrease to 7 mol% s. The Mo content of 4.4 wt.-% would however still be above the 2 wt.-% limit associated with hot corrosion resistance. The values above were obtained with ThermoCalc using TTNi8 as data base. This observation suggests that the HM filler should be lean to enable a useful WGB methodology when elements such as Mo, Ti and other elements which are present in blade alloys are used as melt depressants. The observation also suggests that elements which have to be limited in the MA, e.g. Mo with respect to hot corrosion, and Ti and Nb with respect to oxidation, cannot be used at very high levels in the LM filler. Otherwise, the MA will contain too high levels of them even if they are set to zero in the HM filler.

The LM filler used to meet the objective for the present invention is based on a wide synergy melt depressant recipe comprising Cr, Fe, Mo, Ti, Ta, Nb and Hf which are used as alloy elements in New Industrial Gas Turbine alloys. The use of such fillers as melt depressant elements is not unknown. The novelty here is the design of the melt depressant recipe in combination with a lean HM filler such that the resulting MA is a New IGT alloy.

The inventive idea exemplified below and two embodiments are provided in these examples:

If the LM filler is defined, in wt.-%, as LMLHf: Ni-15Fe-14Cr-3Mo-4.5Al-2.4Ti-18Ta-0.3Hf-0.015B- 0.01Zr-0.01Si-0.04Y and is mixed 1:2 with a lean HM filler defined, in wt.-%, as HMLHf: Ni-4.5Co-14Cr-6W-5Al-0.1C-0.015B-0.01Zr-0.01Si- 0.04Y the result after brazing and homogenization is an MA with a composition, in wt.-%, of MALHf: Ni-3Co-5Fe-14Cr-1Mo-4W-4.8Al-0.8Ti-6Ta-0.1Hf- 0.07C-0.015B-0.01Zr-0.01Si-rem(Y)

The values of Mo, Ti, Ta and Hf are at excess levels in LMLHf while set to zero in HMLHf which acts as a diffusion sink and absorbs these excess levels. The result is that MALHf does contain levels of Mo, Ti, Ta and Hf consistent with the requirements on a New IGT alloy. Small levels of Si and Y have been added to LMLHf and HMLHf to promote selective oxidation of $Cr_2O_3$, and to neutralize S present in the LM and HM powders, or, picked up during the brazing process. Rem(Y) denotes remaining Y after the WGB process in which some of the initial Y will evaporate. According to ThermoCalc using TTNi8 and TCNi8 as data bases, the Liquidus levels of LMLHf are 1218°C and 1213°C respectively. Using TTNi8, MALHf has a Solvus of 1124°C, a Solidus of 1291°C, a gamma prime content at 850°C of 49mol%, 2.9mol% a Cr as UP at 700°C, and an Al activity at 1000°C of 5.35e-8.

With 14 wt.-% Cr MALHf is able to form protective $Cr_2O_3$, and with only 1 wt.-% Mo the corrosion resistance is not compromised. With 4.8 wt.-% Al supported by 5 wt.-%Fe, 14 wt.-% Cr and 6 wt.-% Ta, and with only 0.8 wt.-% Ti and no Nb, MALHf is able to form protective $Al_2O_3$. The Al activity of 5.35e-8 at 1000°C is in fact well above the Al activity of 4.3e-8 at 1000°C of STAL15SX which has a high oxidation resistance, proven in the lab as well as in service, thanks to its ability to form protective $Al_2O_3$. 1 wt.-% Mo + 4 wt.-% W for strengthening of the gamma matrix is the same as for STAL15SX, 49 mol% of gamma prime at 850°C is somewhat above STAL15SX, and 6 wt.-% Ta + 0.8 wt.-% Ti provide about the same level of strengthening as the 8 wt.-% Ta used in STAL15SX. The predicted level of UP is sligthly below that in STAL15SX which has been shown to be stable in service. Hence MALHf is a high strength New IGT alloy with a high phase stablity, high corrosion resistance and high oxidation resistance. Furthermore, TLB in the 1250°C to 1280°C range is possible given the high Solidus value of 1291°C.

Sensitivity analysis using ThermoCalc with TTNi8 as data base reveal that the melt depressant effect is indeed obtained via a wide synergy. If Cr, Fe, Mo, Ti, Ta or Hf is eliminated from LMLHf the Liquidus is increased by 57, 43, 24, 55, 250 or 3°C respectively. The melt depressant effect can be regarded as enabled by Ta and enhanced by Cr, Fe, Mo, Ti and Hf. It is interesting to note that the moderate addition of Mo has a surprisingly benefical effect. Ta is used as the main melt depressant since it can and should be present at a significant level in a new IGT alloy for creep, corrosion and oxidation resistance. Taken together, these elements allow a Liquidus of less than 1230°C to be obtained.

If the LM filler is defined, in wt.-%, as LMHHf: Ni-15Fe-9Co-14Cr-4.5Mo-5Al-2.4Ti-10.5Ta-4.5Hf- 0.015B-0.01Zr-0.01Si-0.04Y and is mixed 1:2 with a lean HM filler defined, in wt.-%, as HMHHf: Ni-14Cr-4.7W-4.7Al-0.1C-0.015B-0.01Zr-0.01Si- 0.04Y the result after brazing and homogenization is an MA with a composition, in wt.-%, of MAHHf: Ni-3Co-5Fe-14Cr-1.5Mo-3.5W-4.8Al-0.8Ti-3.5Ta- 1.5Hf-0.07C-0.015B-0.01Zr-0.01Si-rem(Y)

The values of Mo, Ti, Ta and Hf are at excess levels in LMHHf while set to zero in HMHHf which acts as a diffusion sink and absorbs these excess levels. The result is that MAHHf does contain levels of Mo, Ti, Ta and Hf typical for many New IGT alloys. Small levels of Si and Y have been added to LMHHf and HMHHf to promote selective oxidation of $Cr_2O_3$, and to neutralize S present in the LM and HM powders, or, picked up during the brazing process. Rem(Y) denotes remaining Y after the WGB process in which some of the initial Y will evaporate. According to ThermoCalc using TTNi8 and TCNi8 as data bases, the Liquidus levels of LMHHf are of 1212°C and 1193°C respectively. Using TTNi8, MAHHf has a Solvus of 1115°C, a Solidus of 1281°C, a gamma prime content at 850°C of 44mol%, 2mol% a Cr as UP at 700°C, and an Al activity at 1000°C of 5.23e-8.

With 14 wt.-% Cr and only 1.5 wt.-% Mo MAHHf is able to form protective $Cr_2O_3$ and with only 1.5 wt.-% Mo the hot corrosion resistance is not compromised. With 4.8 wt.-% Al supported by 5 wt.-%Fe, 14 wt.-% Cr and 3.5 wt.-%Ta, and with only 0.8 wt.-% Ti, MAHHf is able to form protective $Al_2O_3$. The Al activity of 5.23e-8 at 1000°C is well above the Al activity of 4.3e-8 at 1000°C of STAL15SX which has a proven high oxidation resistance, proved in the lab as well as in service, thanks to its ability to form protective $Al_2O_3$. 1.5 wt.-% Mo + 3.5 wt.-% W for strengthening of the gamma matrix is somewhat more than in STAL15SX, 44 mol% of gamma prime at 850°C is somewhat below STAL15SX, and 3 wt.-% Ta + 1.5wt.-% Hf + 0.8 wt.-% Ti provide about the same level of strengthening as the 8 wt.-% Ta used in STAL15SX. The predicted level of UP is below that in STAL15SX which has been shown to be stable in service. Hence MAHHf is a high strength New IGT alloy with a high phase stability, high corrosion resistance and high oxidation resistance. Furthermore, TLB in the 1250 to 1280°C range is possible, although marginally so at the higher end, given the Solidus value of 1281°C.

Sensitivity analysis using ThermoCalc with TTNi8 as data base reveal that the melt depressant effect is indeed obtained via a wide synergy. If Cr, Fe, Mo, Ti, Ta or Hf is eliminated from LMHHf the Liquidus is increased by 45, 34, 34, 50, 96 or 42°C respectively. The melt depressant effect can be regarded as enabled by Ta and enhanced by Cr, Fe, Mo, Ti and Hf. It is interesting to note that the moderate addition of Mo has a surprisingly beneficial effect. Taken together, these elements allow a Liquidus of less than 1230°C to be obtained.

The LM filler in the present invention can furthermore be used for thin gap brazing of a blade alloy against a lean nickel base alloy. In particular, it can be used to attach a cover plate made in a lean sheet alloy such as Nim75 or Haynes214 to a main part made in a new IGT alloy to form a gas turbine stator part such as a vane or a heat shield. The lean sheet alloy will then act as a diffusion sink for the excess levels of elements such as Fe, Mo, Ti, Ta, Nb or Hf in the LM filler. This will strengthen the sheet alloy in the vicinity of the joint.

The LM filler in the present invention can furthermore be used for thin gap brazing of a blade alloy against any nickel base alloy in which at least one of the surfaces to be brazed has been nickel plated. The nickel plating will then act as a diffusion sink for the excess levels of elements such as Fe, Mo, Ti, Ta, Nb or Hf in the LM filler.

According to one embodiment, the LM filler alloy may include up to 15 wt.-% Co, between 12 and 18 wt.-% Fe, between 12 and 18 wt.-% Cr, between 1 and 6 wt.-% Mo, up to 3 wt.-% Re, up to 3 wt.-% W, between 3.5 and 7 wt.-% Al, between 1 and 4 wt.-% Ti, between 9 and 20 wt.-% Ta, up to 4 wt.-% Nb, up to 0.1 wt.-% C, up to 0.05 wt.-% B, up to 0.1 wt.-% Zr, between 0.1 and to 6 wt.-% Hf, up to 0.1 wt.-% Si, and up to 0.3 wt.- % of the sum of rare earths such as Sc, Y, the actinides and the lanthanides, the rest being Ni and unavoidable impurities.

Additionally, the LM filler alloy may include up to 15 wt.-% Co, between 12 and 18 wt.-% Fe, between 12 and 18 wt.-% Cr, between 1 and 6 wt.-% Mo, up to 3 wt.-% Re, up to 3 wt.-% W, between 3.5 and 7 wt.-% Al, between 1 and 4 wt.-% Ti, between 9 and 20 wt.-% Ta, up to 4 wt.-% Nb, up to 0.1 wt.-% C, between 0.005 and 0.05 wt.-% B, between 0.005 and 0.05 wt.-% Zr, between 0.1 and to 6 wt.-% Hf, between 0.005 and 0.05 wt.-% Si, and between 0.01 and 0.3 wt.-% of the sum of rare earths such as Sc, Y, the actinides and the lanthanides, the rest being Ni and unavoidable impurities.

Additionally, the LM filler alloy may include between 13 and 17 wt.-% Fe, between 12 and 16 wt.-% Cr, between 2 and 4 wt.- % Mo, between 3.5 and 5.5 wt.-% Al, between 2 and 3 wt.-% Ti, between 16 and 20 wt.-% Ta, between 0.005 and 0.05 wt.-% C, between 0.005 and 0.03 wt.-% B, between 0.005 and 0.03 wt.-% Zr, between 0.1 and 0.5 wt.-% Hf, between 0.005 and 0.03 wt.-% Si, and between 0.01 and 0.06 wt.-% Y.

In a preferred embodiment called LM1, the LM filler alloy may include about 15 wt.-% Fe, about 14 wt.-% Cr, about 3 wt.-% Mo, about 4.5 wt.-% Al, about 2.4 wt.-% Ti, about 18 wt.-% Ta, about 0.01 wt.-% C, about 0.015 wt.-% B, about 0.01 wt.-% Zr, about 0.3 wt.-% Hf, about 0.01 wt.-% Si, and about 0.04 wt.-% Y.

Alternatively, the LM filler alloy may include between 7 and 13 wt.-% Co, between 13 and 17 wt.-% Fe, between 12 and 16 wt.-% Cr, between 4 and 5 wt.-% Mo, between 4 and 7 wt.-% Al, between 2 and 3 wt.-% Ti, between 9 and 12 wt.-% Ta, between 0.005 and 0.03 wt.-% C, between 0.005 and 0.03 wt.-% B, between 0.005 and 0.03 wt.-% Zr, between 0.005 and 0.03 wt.-% Si, and between 0.01 and 0.06 wt.-% of Y.

In a preferred embodiment called LM2, the LM filler alloy may include about 9 wt.-% Co, about 15 wt.-% Fe, about 14 wt.-% Cr, about 4.5 wt.-% Mo, about 5 wt.-% Al, about 2.4 wt.-% Ti, about 10.5 wt.-% Ta, about 0.01 wt.-% C, about 0.015 wt.- % B, about 0.01 wt.-% Zr, about 0.01 wt.-% Si, and about 0.04 wt.-% Y.

Table 1-1: Compositions for Aero, New IGT, Classical IGT, and lean sheet alloys referred to in this application.

|    | STAL15SX | Edge14 | STAL125CC1 | STAL125CC2 | CMSX4 | CM247CC | IN792 |
|----|----------|--------|------------|------------|-------|---------|-------|
| Ni | B | B | B | B | B | B | B |
| Cr | 15 | 14 | 12.5 | 12.5 | 6.4 | 8 | 12.5 |
| Fe |  | 6 |  | 4 |  |  |  |
| Co | 5 |  | 5 | 3 | 9 | 9.5 | 8.5 |
| Mo | 1 |  | 1.5 | 1.5 | 0.6 | 0.6 | 1.8 |
| Re |  |  |  |  | 3 |  |  |
| W | 4 | 2 | 3.5 | 3 | 6.5 | 9.5 | 4 |
| Al | 4.6 | 6.5 | 5.5 | 5.5 | 5.6 | 5.6 | 3.3 |
| Ti |  |  |  |  | 1 | 0.7 | 4.2 |
| Ta | 8 | 3 | 8 | 8 | 6 | 3.2 | 4.2 |
| Nb |  |  |  |  |  |  |  |
| Hf | 0.1 | 1.5 | 0.5 | 0.5 | 0.1 | 1.4 | 0.5 |
| C | 0.015 | 0.05 | 0.07 | 0.07 |  | 0.07 | 0.07 |
| Zr |  | 0.01 | 0.01 | 0.01 |  | 0.01 | 0.02 |
| B |  | 0.01 | 0.015 | 0.015 |  | 0.015 | 0.015 |
| Si | 0.25 | 0.01 | 0.01 | 0.01 |  |  |  |
| Y |  | 0.04 |  |  |  |  |  |

Table 1-2: Compositions for Aero, New IGT, Classical IGT, and lean sheet alloys referred to in this application.

|    | GTD-111 | GTD-141 | IN738LC | NIM75 | Haynes214 |
|----|---------|---------|---------|-------|-----------|
| Ni | B | B | B | B |  |
| Cr | 14 | 14 | 16 | 20 | 16 |
| Fe |  |  |  |  | 3 |
| Co | 9.5 | 9.5 | 8.5 |  |  |
| Mo | 1.5 | 1.5 | 1.8 |  |  |
| Re |  |  |  |  |  |
| W | 3.7 | 3.7 | 2.6 |  |  |
| Al | 3 | 3 | 3.5 |  | 4.5 |
| Ti | 4.9 | 4.9 | 3.5 | 0.4 |  |

(continued)

|  | GTD-111 | GTD-141 | IN738LC | NIM75 | Haynes214 |
|---|---|---|---|---|---|
| Ta | 2.8 |  | 1.8 |  |  |
| Nb |  | 1.5 | 0.9 |  |  |
| Hf |  |  |  |  |  |
| C | 0.1 | 0.1 | 0.07 | 0.1 | 0.04 |
| Zr | 0.02 | 0.02 | 0.02 |  | 0.01 |
| B | 0.015 | 0.015 | 0.015 |  |  |
| Si |  |  |  |  | 0.1 |
| Y |  |  |  |  | 0.01 |

Table 2: Compositions for BFM/LM fillers referred to in this application

|  | BNi 1a | BNi5 | BNi7 | BNi9 | DF4 B | OZ1 | OZ2 | OZ3 | LMLH f | LMHH f |
|---|---|---|---|---|---|---|---|---|---|---|
| Ni | B | B | B | B | B | B | B | B | B | B |
| Cr | 14 | 19 | 14.3 | 15 | 14 | 6.5 | 4.5 | 15.1 | 14 | 14 |
| Fe | 4.5 |  |  | 1.5 |  |  |  |  | 15 | 15 |
| Co |  |  |  |  | 10 |  |  | 15.8 |  | 9 |
| Mo |  |  |  |  |  |  | 13 |  | 1 | 1.5 |
| W |  |  |  |  |  |  |  |  |  |  |
| Al |  |  |  |  | 3.5 |  |  | 2.1 | 4.5 | 5 |
| Ti |  |  |  |  |  | 7.5 | 8 | 10 | 2.4 | 2.4 |
| Ta |  |  |  |  | 2.5 |  |  |  | 18 | 10.5 |
| Nb |  |  |  |  |  |  |  |  |  |  |
| Hf |  |  |  |  |  |  | 18.5 |  | 0.3 | 4.5 |
| C | 0.0 6 | 0.06 | 0.06 | 0.06 | 0.0 5 |  |  |  | 0.01 | 0.01 |
| Zr |  |  |  |  |  | 11 |  |  | 0.01 | 0.01 |
| B | 3.1 |  |  | 3.6 | 2.8 |  |  |  | 0.01 | 0.01 |
| Si | 4.5 | 10.1 |  |  |  |  |  |  | 0.01 | 0.01 |
| P |  |  | 10.2 |  |  |  |  |  |  |  |
| Y |  |  |  |  | 0.0 4 |  |  |  | 0.04 | 0.04 |

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

**Claims**

1. Metal alloy containing

    0 wt.-% to 15 wt.-% Co,
    12 wt.-% to 18 wt.-% Fe,
    12 wt.-% to 18 wt.-% Cr,
    1 wt.-% to 6 wt.-% Mo,
    0 wt.-% to 3 wt.-% Re,

0 wt.-% to 3 wt.-% W,
3.5 wt.-% to 7 wt.-% Al,
1 wt.-% to 4 wt.-% Ti,
9 wt.-% to 20 wt.-% Ta,
0 wt.-% to 4 wt.-% Nb,
0 wt.-% to 0.1 wt.-% C,
0 wt.-% to 0.05 wt.-% B,
0 wt.-% to 0.1 wt.-% Zr,
0.1 wt.-% to 6 wt.-% Hf,
0 wt.-% to 0.1 wt.-% Si, and
a total amount of rare earths such as Sc, Y, actinides and lanthanides being selected from a range from 0 wt.-% to 0.3 wt.-%,
the rest being Ni and unavoidable impurities.

2. Metal alloy according to claim 1, wherein the metal alloy contains

0 wt.-% to 15 wt.-% Co,
12 wt.-% to 18 wt.-% Fe,
12 wt.-% to 18 wt.-% Cr,
1 wt.-% to 6 wt.-% Mo,
0 wt.-% to 3 wt.-% Re,
0 wt.-% to 3 wt.-% W,
3.5 wt.-% to 7 wt.-% Al,
1 wt.-% to 4 wt.-% Ti,
9 wt.-% to 20 wt.-% Ta,
0 wt.-% to 4 wt.-% Nb,
0 wt.-% to 0.1 wt.-% C,
0.005 wt.-% to 0.05 wt.-% B,
0.005 wt.-% to 0.05 wt.-% Zr,
0.1 wt.-% to 6 wt.-% Hf,
0.005 wt.-% to 0.05 wt.-% Si, and
a total amount of rare earths such as Sc, Y, actinides and lanthanides being selected from a range from 0.01 wt.-% to 0.3 wt.-%,
the rest being Ni and unavoidable impurities.

3. Metal alloy according to claim 2, wherein the metal alloy contains

13 wt.-% to 17 wt.-% Fe,
12 wt.-% to 16 wt.-% Cr,
2 wt.-% to 4 wt.-% Mo,
3.5 wt.-% to 5.5 wt.-% Al,
2 wt.-% to 3 wt.-% Ti,
16 wt.-% to 20 wt.-% Ta,
0.005 wt.-% to 0.05 wt.-% C,
0.005 wt.-% to 0.03 wt.-% B,
0.005 wt.-% to 0.03 wt.-% Zr,
0.1 wt.-% to 0.5 wt.-% Hf,
0.005 wt.-% to 0.03 wt.-% Si, and
0.01 wt.-% to 0.06 wt.-% Y,
the rest being Ni and unavoidable impurities

4. Metal alloy according to claim 3, wherein the metal alloy contains about 15 wt.-% Fe, about 14 wt.-% Cr, about 3 wt.-% Mo, about 4.5 wt.-% Al, about 2.4 wt.-% Ti, about 18 wt.-% Ta, about 0.01 wt.-% C, about 0.015 wt.-% B, about 0.01 wt.-% Zr, about 0.3 wt.-% Hf, about 0.01 wt.-% Si, and about 0.04 wt.-% Y, the rest being Ni and unavoidable impurities.

5. Metal alloy according to claim 2, wherein the metal alloy contains

7 wt.-% to 13 wt.-% Co,

13 wt.-% to 17 wt.-% Fe,
12 wt.-% to 16 wt.-% Cr,
4 wt.-% to 5 wt.-% Mo,
4 wt.-% to 7 wt.-% Al,
2 wt.-% to 3 wt.-% Ti,
9 wt.-% to 12 wt.-% Ta,
0.005 wt.-% to 0.03 wt.-% C,
0.005 wt.-% to 0.03 wt.-% B,
0.005 wt.-% to 0.03 wt.-% Zr,
0.005 wt.-% to 0.03 wt.-% Si, and
0.01 wt.-% to 0.06 wt.-% of Y,
the rest being Ni and unavoidable impurities.

6. Metal alloy according to claim 5, wherein the metal alloy contains about 9 wt.-% Co, about 15 wt.-% Fe, about 14 wt.-% Cr, about 4.5 wt.-% Mo, about 5 wt.-% Al, about 2.4 wt.-% Ti, about 10.5 wt.-% Ta, about 0.01 wt.-% C, about 0.015 wt.-% B, about 0.01 wt.-% Zr, about 0.01 wt.-% Si, and about 0.04 wt.-% Y, the rest being Ni and unavoidable impurities

7. Metal alloy according to any of the preceding claims, wherein the metal alloy contains less than 5ppmw S.

8. Use of a metal alloy according to any of the preceding claims for brazing.

9. Use according to claim 8, wherein the brazing is a wide gap brazing with a lean high melting filler to enable a mixed alloy which is a classical industrial gas turbine blade alloy with a high phase stability as outlined the section describing the invention in which the HM filler is produced with a low sulfur process resulting in <5ppmw S.

10. Use according to claim 8, wherein the brazing is thin gap brazing of a classical industrial gas turbine alloy to a lean sheet alloy such that the sheet alloy is strengthened at and close to the joint as it absorbs the excess levels of strengthening elements from the low melting filler.

11. Use according to claim 8, wherein the brazing is thin gap brazing of parts made in Nickel base alloys in which one or more of the surfaces to be brazed has been Ni plated such that the plating is strengthened as it absorbs the excess levels of strengthening elements from the low melting filler.

## EUROPEAN SEARCH REPORT

**Application Number**

EP 24 20 2777

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2015/343574 A1 (OZBAYSAL KAZIM [US]) 3 December 2015 (2015-12-03) * the whole document * | 1-11 | INV. C22C19/05 C22C1/04 B23K35/30 C22C30/00 B23K1/00 B23K35/02 |
| A | WO 2024/075560 A1 (NAT INST MATERIALS SCIENCE [JP]) 11 April 2024 (2024-04-11) * the whole document * | 1-11 | |
| A,D | US 11 344 977 B2 (SIEMENS ENERGY INC [US]) 31 May 2022 (2022-05-31) * the whole document * | 1-11 | |

**TECHNICAL FIELDS SEARCHED (IPC)**

C22C
B23K

The present search report has been drawn up for all claims

| Place of search | Date of completion of the search | Examiner |
|---|---|---|
| The Hague | 14 February 2025 | Morra, Valentina |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

EP 4 717 785 A1

## ANNEX TO THE EUROPEAN SEARCH REPORT
## ON EUROPEAN PATENT APPLICATION NO.

EP 24 20 2777

14-02-2025

| Patent document cited in search report | Publication date | Patent family member(s) | Publication date |
|---|---|---|---|
| US 2015343574 A1 | 03-12-2015 | NONE | |
| WO 2024075560 A1 | 11-04-2024 | NONE | |
| US 11344977 B2 | 31-05-2022 | CN 106170368 A | 30-11-2016 |
| | | EP 3131697 A2 | 22-02-2017 |
| | | KR 20160145135 A | 19-12-2016 |
| | | US 2015290747 A1 | 15-10-2015 |
| | | WO 2015160523 A2 | 22-10-2015 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11344977 B2
- US 20150343574 A1